# EUROPEAN PATENT APPLICATION

(11) **EP 3 657 425 A1**
(43) Date of publication of application: **27.05.2020**
(21) Application number: 19198910.2
(22) Date of filing: 23.09.2019
(51) Int. Cl.: G06Q 30/06

(54) **METHOD FOR PUSHING INFORMATION AND RELATED PRODUCTS**

(30) Priority: 26.11.2018 CN 201811423446
(71) Applicant: GUANGDONG OPPO MOBILE TELECOMMUNICATIONS CORP., LTD., Wusha, Chang'an Dongguan, Guangdong 523860 (CN)
(72) Inventor: ZHANG, Haiping, Dongguan, Guangdong 523860 (CN)
(74) Representative: Mewburn Ellis LLP

(57) **Abstract**

Provided are a method for pushing information and related products. The method is applicable to an electronic device including a color sensor. The method includes the following. A search instruction for a specified clothes type is received. A target color corresponding to a first area is obtained by scanning the first area with the color sensor. Clothes search information is pushed according to the target color and the specified clothes type.

## Description

### TECHNICAL FIELD

This disclosure relates to the technical field of electronic devices, and more particularly to a method for pushing information and related products.

### BACKGROUND

With improvement of living standard, people have an increasing pursuit of beauty and often desire to buy new clothes to make themselves look more beautiful. Currently, however, to purchase clothes online, people can depend only on size information provided by merchants but cannot try on clothes, so it is difficult to know whether the clothes are suitable for them. Therefore, how to improve the accuracy of clothes information pushing is a technical problem to be solved by those skilled in the art.

### SUMMARY

According to implementations of the present disclosure, a method for pushing information and related products are provided, which can make pushing of clothes more accurate.

In a first aspect of the present disclosure, a method for pushing information is provided. The method is applicable to an electronic device including a color sensor. The method includes the following. A search instruction for a specified clothes type is received. A target color corresponding to a first area is obtained by scanning the first area with the color sensor. Clothes search information is pushed according to the target color and the specified clothes type.

In a second aspect of the present disclosure, an electronic device is provided. The electronic device includes a control circuit, a color sensor, and a communication circuit which are coupled with the control circuit. The communication circuit is configured to receive a search instruction for a specified clothes type. The color sensor is configured to obtain a target color corresponding to a first area by scanning the first area. The control circuit is configured to push clothes search information according to the target color and the specified clothes type.

In a fifth aspect of the present disclosure, a computer readable storage medium is provided. The computer readable storage medium is configured to store computer programs which, when executed by a computer, are operable with the computer to perform all or part of the operations of the first aspect of the present disclosure.

### BRIEF DESCRIPTION OF THE DRAWINGS

In order to describe technical solutions of implementations of the present disclosure or the related art more clearly, the following will give a brief description of accompanying drawings used for describing implementations of the present disclosure or the related art. Apparently, accompanying drawings described below are merely some implementations of the present disclosure. Those of ordinary skill in the art can also obtain other accompanying drawings based on the accompanying drawings described below without creative efforts.
FIG. 1A is a schematic structural diagram of an electronic device according to an implementation of the present disclosure.
FIG. 1B is a curve diagram of wavelengths and sensitivities of multiple channels according to an implementation of the present disclosure.
FIG. 1C is a schematic diagram of a positional relationship between a color sensor and a camera according to an implementation of the present disclosure.
FIG. 1D is a schematic diagram of a positional relationship between a color sensor and a camera according to another implementation of the present disclosure.
FIG. 2A is a schematic flowchart of a method for pushing information according to an implementation of the present disclosure.
FIG. 2B is a schematic diagram of a scenario for entering a specified clothes type according to an implementation of the present disclosure.
FIG. 3 is a schematic structural diagram of an electronic device according to another implementation of the present disclosure.
FIG. 4 is a schematic structural diagram of an apparatus for pushing information according to an implementation of the present disclosure.

### DETAILED DESCRIPTION

In order for those skilled in the art to better understand technical solutions of the present disclosure, technical solutions of implementations of the present disclosure will be described clearly and completely with reference to accompanying drawings in implementations of the present disclosure. Apparently, implementations described hereinafter are merely some implementations, rather than all implementations, of the present disclosure. All other implementations obtained by those of ordinary skill in the art based on implementations of the present disclosure without creative efforts shall fall within the protection scope of the present disclosure.

The terms "first", "second", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units. Instead, it can optionally include other steps or units that are not listed; alternatively, other steps or units inherent to the process, method, product, or apparatus can also be included.

The term "implementation" referred to herein means that a particular feature, structure, or character described in conjunction with the implementation may be contained in at least one implementation of the present disclosure. The phrase appearing in various places in the specification does not necessarily refer to the same implementation, nor does it refer to an independent or alternative implementation that is mutually exclusive with other implementations. It is explicitly and implicitly understood by those skilled in the art that an implementation described herein may be combined with other implementations.

An electronic device in implementations of the disclosure may include various handheld devices, in-vehicle devices, wearable devices, computing devices that have wireless communication functions or other processing devices connected to the wireless modem, as well as various forms of user equipments (UE), mobile stations (MS), terminal devices, and the like. For the convenience of description, the above-mentioned devices are collectively referred to as the electronic device. Hereinafter, implementations of the disclosure will be described in detail.

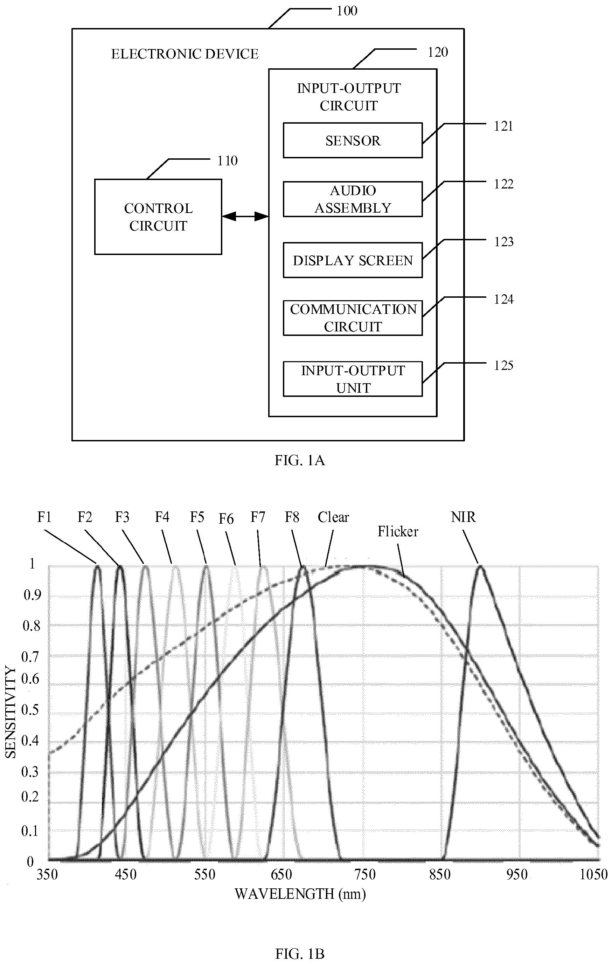

FIG. 1A is a schematic structural diagram of an electronic device 100 according to an implementation of the present disclosure. As illustrated in FIG. 1A, the electronic device 100 includes a control circuit 110 and an input-output circuit 120. The input-output circuit 120 is coupled with the control circuit 110.

The control circuit 110 can include a store-and-process circuit. The store-and-process circuit has a storage circuit which may be a memory, such as a hard drive memory, a non-transitory memory (such as a flash memory, other electronically programmable read-only memories used to form a solid-state drive, or the like), a transitory memory (such as a static random access memory, dynamic random access memory, or the like), or the like, which is not limited herein. The store-and-process circuit has a processing circuit to control operations of the electronic device 100. The processing circuit can be implemented based on one or more microprocessors, microcontrollers, digital signal processors, baseband processors, power management units, audio codec chips, application-specific integrated circuits, display driver integrated circuits, or the like.

The store-and-process circuit can be configured to run software of the electronic device 100, such as an incoming-call ringtone playback application, a short-message ringtone playback application, an alarm-clock ringtone playback application, a media-file playback application, a voice over Internet protocol (VOIP) phone call application, operating system function, and the like. The software may be used for some control, such as playing an incoming-call ringtone, playing a short-message ringtone, playing an alarm-clock ringtone, playing a media file, making a voice phone call, and other functions of the electronic device 100, which is not limited herein.

The input-output circuit 120 can be configured to achieve data input and data output of the electronic device 100, that is, to allow the electronic device 100 to receive data from an external device and also allow the electronic device 100 to output data to the external device.

The input-output circuit 120 can further include a sensor 121. The sensor 121 can include an ambient light sensor, an optical or capacitive infrared proximity sensor, an ultrasonic sensor, a touch sensor (e.g., based on an optical touch sensor and/or a capacitive touch sensor, where the touch sensor may be a part of a touch display screen or may be used independently as a touch sensor structure), an acceleration sensor, a gravity sensor, and other sensors.

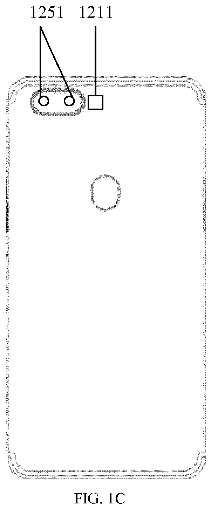

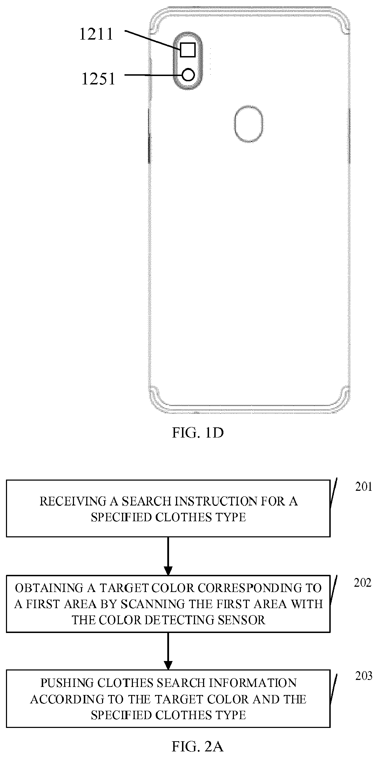

In implementations of the present disclosure, as illustrated in FIG.1C and FIG.1D, the sensor 121 further includes a color sensor 1211. Since different colors have different capacities of absorbing near white lights, the color sensor 1211 can be integrated with multiple channels. Each channel is provided with a filter film to allow only lights of a corresponding wavelength to pass through, for example, a 550nm (nanometer) channel allows only lights of a 550nm wavelength to pass through and does not receive lights of other wavelengths. Each channel collects lights of respective wavelength, such that the color can be determined comprehensively according to energy received by each channel.

For instance, the color sensor 1211 includes eleven channels, that is F1∼F8, Flicker, Clear, and NIR. FIG. 1B illustrates curves of wavelengths and sensitivities of the eleven channels, where each of the eleven channels collects lights of respective wavelength. Therefore, to detect the color of a substance, white lights are emitted from the color sensor 1211 to the substance, a waveform received by each channel is acquired to obtain multiple waveforms, and the color of the substance is determined according to an energy value of each waveform.

The configuration of the color sensor 1211 is not limited in implementations of the disclosure. The color sensor 1211 is disposed near a camera 1251 of the electronic device 100. As illustrated in FIG. 1C, the color sensor 1211 is disposed near the two cameras 1251 of the electronic device 100. Alternatively, as illustrated in FIG. ID, the camera 1251 is a single camera, and the color sensor 1211 can be disposed above the camera 1251, which is not limited herein.

The input-output circuit 120 can further include an audio assembly 122. The audio assembly 122 is configured to provide the electronic device 100 with audio input and output functions. The audio assembly 122 may include a tone generator and other assemblies for generating and detecting sound.

The input-output circuit 120 can further include at least one display screen 123. The display screen 123 may include one or more of a liquid crystal display, an organic light emitting diode (OLED) display, an electronic ink display, a plasma display, and displays based on other display technologies. As an example, the display screen 123 includes an array of touch sensors (i.e., the display screen 123 can be a touch display screen). The touch sensor may be a capacitive touch sensor formed by an array of transparent touch sensor electrodes (e.g., indium tin oxide (ITO) electrodes), or may be a touch sensor formed with other touch technologies, such as acoustic touch, pressure sensitive touch, resistance touch, optical touch, and the like, which is not limited herein.

The input-output circuit 120 can further include a communication circuit 124. The communication circuit 124 is configured to provide the electronic device 100 with an ability to communicate with external devices. The communication circuit 124 includes analog/digital input-output interface circuits and wireless communication circuits based on radio frequency signals and/or optical signals. The wireless communication circuit of the communication circuit 124 may include a radio frequency transceiver circuit, a power amplifier circuit, a low-noise amplifier, a switch, a filter, and an antenna. As an example, the wireless communication circuit of the communication circuit 124 includes a circuit for supporting near field communication (NFC) by transmitting and receiving near field coupled electromagnetic signals. Specifically, the communication circuit 124 includes an NFC antenna and an NFC transceiver. The communication circuit 124 further includes transceivers and antennas for a cellular phone, transceiver circuits and antennas for a wireless local area network, and the like.

The input-output circuit 120 can further include an input-output unit 125. The input-output unit 125 can include buttons, joysticks, click wheels, scroll wheels, touch pads, keypads, keyboards, the camera 1251, LEDs, and other status indicators.

In implementations of the disclosure, the input-output unit 125 further includes a 3-dimension (3D) detecting module 1252. The 3D detecting module 1252 is configured to acquire 3D data of a human body. In the related art, a binocular scheme, a 3D structured light scheme, and a time of flight (TOF) scheme are available.

Under the binocular scheme, in general, two digital images of a surrounding landscape are acquired at the same time from different perspectives by double cameras. Alternatively, two digital images of a surrounding landscape are acquired at different time points from different perspectives by one single camera. 3D geometric information of an object can be acquired based on a parallax principle to reconstruct a 3D shape and position of the surrounding landscape.

In terms of the 3D structured light technology, lights of a certain structural feature are projected, with a near infrared laser, onto an object being paragraphed and then is collected by a specific infrared camera. With aid of such lights of a certain structure, different image phase information can be collected due to different depth regions of the object being paragraphed. Then such a structural change is converted into depth information with an arithmetic unit to obtain a 3D structure.

Under the TOF scheme, based on TOF technology, five core hardware units are included, that is, an infrared transmitting unit, an optical lens, an imaging sensor, a control unit, and a computing unit. The control unit is a driving chip of a laser emitter and is can drive a laser to drive with a high-frequency impulse up to 100MHz (megahertz). The infrared transmitting unit is configured to transmit lights. The optical lens is configured to converge lights reflected. The imaging sensor is configured to receive the lights reflected back and perform photovoltaic conversion on the imaging sensor. The core algorithm computing unit is a chip of the electronic device and is configured to perform a further calculation according to an image obtained by the imaging sensor to obtain 3D data.

It can be understood that, 3D data of an area to-be-detected can be acquired according to at least one of the above three schemes, such that modeling or other activities can be further performed according to the 3D data.

The electronic device 100 can further include a battery (not illustrated). The battery is configured to power the electronic device 100.

In implementations of the disclosure, the communication circuit 124 is configured to receive a search instruction for a specified clothes type. The color sensor 1211 is configured to obtain a target color corresponding to a first area by scanning the first area. The control circuit 110 is configured to push clothes search information according to the target color and the specified clothes type.

As can be seen, the electronic device 100 receives the search instruction for a specified clothes type, obtains the target color corresponding to the first area by scanning the first area with the color sensor 1211 of the electronic device 100, and pushes the clothes search information according to the target color and the specified clothes type. As such, clothes search information corresponding to the specified clothes type and the target color can be pushed, which improves flexibility and accuracy of clothes information pushing.

In an example, the first area is of a single color, such as the wall. Generally, the first area may be of multiple colors. For example, the first area includes multiple separate sub-areas or involves different objects with different colors, and each separate sub-area or each object has a different color. In terms of obtaining the target color corresponding to the first area by scanning the first area with the color sensor, the color sensor is configured to obtain multiple colors by scanning the first area with the color sensor. The control circuit 110 is configured to: control the display screen 123 to display a selection page corresponding to the multiple colors; control the communication circuit 124 to receive an instruction specifying a color sent by a user based on the selection page; determine the target color according to the instruction specifying a color. For example, if green, black, pink, yellow, and red are presented in the selection page, and the instruction received from the user indicates that the color selected by the user is pink, then the control circuit 110 will take pink as the target color for subsequent processing.

In an example, in terms of pushing the clothes search information according to the target color and the specified clothes type, the control circuit 110 is configured to: search, from a predetermined database, for multiple clothes corresponding to the specified clothes type and the target color; acquire multiple clothes purchase records of a user on the specified clothes type; determine, according to the multiple clothes purchase records, an order of push of the multiple clothes; push, according to the order of push, the clothes search information of the multiple clothes. The purchase records can reflect users' preferences to some extent, therefore, determining the order of push according to the purchase records can make the clothes that user may be interested in be pushed to the user first, which is more convenient to facilitate the purchase of clothes.

The control circuit is further configured to: search, from a predetermined database, for a plurality of clothes corresponding to the specified clothes type and the target color, acquire a plurality of clothes purchase records of a user on the specified clothes type, and determine, according to the plurality of clothes purchase records, an order of push of the plurality of clothes. The clothes search information of the plurality of clothes is pushed according to the order of push determined.

It is desirable that an appropriate size be recommended to the user according to his or her figure to further accelerate clothes selection and/or purchase. To this end, in an example, the electronic device further includes the 3D detecting module. The 3D detecting module is configured to acquire 3D data of a second area corresponding to the specified clothes type. The control circuit 110 is further configured to: determine a target size according to the 3D data, and push the target size.

In an example, at least one piece of the plurality of clothes has a plurality of sizes. In terms of determining the target size according to the 3D data, the control circuit 110 is configured to: obtain multiple size data by acquiring size data for each of the multiple sizes; obtain multiple match values by acquiring, for each of the multiple size data, a match value with the 3D data; determine a size corresponding to a maximum match value of the multiple match values as the target size.

The size data and the 3D data each comprise a plurality of dimensions. The control circuit configured to obtain the plurality of match values is configured to: compare the size data and the 3D data in terms of each dimension; obtain a plurality of sub-match values with the 3D data by determining a sub-match value with the 3D data for each dimension according to a result of comparison; obtain the match value by weighting of the plurality of sub-match values.

In an example, the control circuit 110 is further configured to obtain an effect drawing by synthesizing, according to the target size, the target piece of clothes and a pre-stored human body model of the user. The display screen 123 is further configured to display the effect drawing.

A method for pushing information is further provided. In this method, a search instruction for a specified clothes type is received from a user, for example, a user of a terminal to which the method provided herein is applied; a target color corresponding to a first area is obtained; clothes search information is determined and pushed according to the target color and the specified clothes type.

FIG. 2A is a schematic flowchart of a method for pushing information according to an implementation of the present disclosure. The method is applicable to the electronic device illustrated in FIG. 1A to FIG. 1D, and more particularly to an online shopping application running on the electronic device or a plug-in for pushing online shopping information. The electronic device includes a color sensor. As illustrated in FIG. 2A, the method begins at block 201.

At 201, a search instruction for a specified clothes type is received.

In implementations of the disclosure, the specified clothes type can include garments, trousers, skirts/dresses, etc., or can further include baseball uniforms, coats, overcoats, wide leg trousers, leggings, jeans, etc., which is not particularly limited herein.

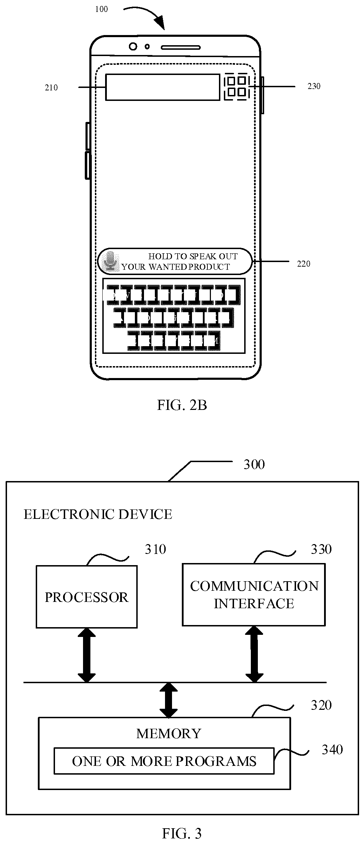

The manner in which the search instruction for a specified clothes type is sent by a user is not limited herein. As illustrated in FIG. 2B, a key word can be entered into a search box 210 and search can be confirmed, such that the specified clothes type can be determined according to the key word. Alternatively, a voice instruction can be sent by the user with a voice pick-up functional assembly 220, such that the specified clothes type can be determined according to the voice instruction; or a category assembly 230 can be enabled to select a clothes type corresponding to the specified clothes type, such that the clothes type selected is the specified clothes type.

At 202, a target color corresponding to a first area is obtained by scanning the first area with the color sensor.

In implementations of the disclosure, the target color is the color of clothes to-be-searched. The first area may be specified by the user, for example by making the terminal oriented to a certain direction, or making the terminal oriented to a certain object. The first area may be part of a piece of clothing, or may be an area of a book, or an area of a plant or a building which has the target color, which is not limited herein.

As mentioned above, the color sensor emits white lights to a substance to-be-detected, waveforms are then collected according to each channel, and the color of the substance to-be-detected is determined according to the wavelength and waveform corresponding to each channel. As such, the target color corresponding to the first area can be obtained by scanning the first area.

In an implementation, the first area includes multiple separate sub-areas. The target color corresponding to the first area is obtained by scanning the first area with the color sensor as follows. Multiple colors are obtained by scanning the first area with the color sensor, where each of the multiple colors corresponds to one separate sub-area. A selection page corresponding to the multiple colors is displayed. An instruction specifying a color sent by a user based on the selection page is received. The target color is determined according to the instruction specifying a color.

In this implementation, the selection page may be a set of selection-function assemblies each corresponding to one of the multiple colors, or may be a set of color assortment schemes consisting of some of the multiple colors, where one color assortment scheme corresponds to one selection-function assembly. For example, the color assortment scheme may include contracting colors, Morandi colors, cool color tones, warm color tones, rainbow-like color assortment, or the like, which is not limited herein. In other words, one of the colors in the first area or a color assortment scheme of the first area may be selected, which makes color search more flexible and accurate.

It can be understood that, in implementations of the disclosure, for each of the multiple separate sub-areas, a reference color corresponding thereto is obtained (that is, the multiple colors are obtained) by scanning the first area with the color sensor. The selection page corresponding to the multiple colors is displayed. Wait to receive the instruction specifying a color sent by the user based on the selection page. The target color is determined according to the instruction specifying a color. In other words, the target color is determined according to the selection on multiple colors corresponding to the first area made by the user, thereby improving flexibility and accuracy of color search.

At 203, clothes search information is pushed according to the target color and the specified clothes type.

In implementations of the disclosure, the clothes search information can include display information of multiple clothes, where each of the multiple clothes is of both the target color and the specified clothes type. For example, the specified clothes type is skirts/dresses, the target color is pink, and accordingly the clothes corresponding to the clothes search information are pink skirts/dresses.

According to the method illustrated in FIG. 2A, the electronic device receives the search instruction for a specified clothes type, obtains the target color corresponding to the first area by scanning the first area with the color sensor of the electronic device, and pushes the clothes search information according to the target color and the specified clothes type. As such, clothes search information corresponding to the specified clothes type and the target color can be pushed, and thus more flexible and accurate clothes information pushing can be achieved.

In the present disclosure, there is no restriction on the manner in which the clothes search information is pushed. In an implementation, the clothes search information is pushed according to the target color and the specified clothes type as follows. Search, from a predetermined database, for multiple clothes corresponding to the specified clothes type and the target color. Multiple clothes purchase records of a user on the specified clothes type are acquired. An order of push of the multiple clothes is determined according to the multiple clothes purchase records. The clothes search information of the multiple clothes is pushed according to the order of push.

In this implementation, the predetermined database includes information on all clothes of the online shopping application running on the electronic device or the plug-in for pushing online shopping information, such as the marked price, stock quantity, size(s), product reviews, or sales volume of each of the clothes, which is not limited herein.

It can be understood that, search, from the predetermined database, for the multiple clothes corresponding to the specified clothes type and the target color. The multiple clothes purchase records of the user on the specified clothes type are acquired. The clothes search information of the multiple clothes is pushed according to the order of push. The clothes purchase records can represent purchase preferences of the user. The clothes correspond to the specified clothes type and the target color. In this way, pushing can be more accurate by determining the order of push of the multiple clothes according to the multiple clothes purchase records.

The manner of searching for the multiple clothes is also not limited herein. In an example, searching, from the predetermined database, for the multiple clothes corresponding to the specified clothes type and the target color includes the following. Information on multiple first clothes corresponding to the specified clothes type in the predetermined database is acquired. Multiple match values are obtained by acquiring, for each of the multiple first clothes, a match value with the target color. The first clothes, whose match value is greater than a preset threshold, is determined as the clothes to be recommended to the user.

In this example, there is no restriction on the preset threshold. The preset threshold is used for selecting first clothes that match the target color. For instance, the match values corresponding to the multiple first clothes are 0.3, 0.75, 0.84, 0.92, 0.95, and 1. Supposing the preset threshold is 0.9, the multiple second match values are 0.92, 0.95, and 1, and accordingly the multiple clothes are first clothes corresponding to the multiple second match values 0.92, 0.95, and 1.

It can be understood that, in this example, search, from the predetermined database, for information on the multiple first clothes corresponding to the specified clothes type. The multiple match values are obtained by acquiring, for each of the multiple first clothes, the match value with the target color. The multiple clothes are then selected from the multiple first clothes according to the preset threshold and the multiple match values. As such, search accuracy can be improved.

In an implementation, the electronic device further includes a 3D detecting module. The method further includes the following. 3D data of a second area corresponding to the specified clothes type is acquired with the 3D detecting module. A target size of a target piece of clothes is determined according to the 3D data. The target size is pushed.

In this implementation, the second area is an area corresponding to the specified clothes type. For instance, if the specified clothes type is tops, the second area is the upper body of the user. If the specified clothes type is trousers, the second area is the lower body of the user. If the specified clothes type is dresses, the second area is the whole body of the user. As mentioned above, the 3D detecting module can acquire 3D data of an area to-be-detected, and as such, the 3D data of the second area can be acquired when the second area is scanned with the 3D detecting module.

In implementations of the present disclosure, the target piece of clothes is any one of the multiple clothes. The size data can be data of multiple dimensions such as waistline, hip circumference, leg opening, trousers length, arm length, etc. The target size is a size of the target piece of clothing that matches the 3D data of the user.

The scenario in which the target size is pushed is not limited herein. The target size may be added to a display page of the multiple clothes, or be added to a display page showing details of the target piece of clothing, or be pushed after the user adds the target piece of clothing to a shopping cart.

It can be understood that, the 3D data of the second area is acquired with the 3D detecting module of the electronic device. The target size of the target piece of clothes is determined according to the 3D data and then pushed. As such, size recommendation is based on figure data of the user, and therefore flexibility and accuracy of pushing of clothes information can be further improved.

The manner in which the target size is determined is not limited in implementations of the disclosure. In an implementation, the target piece of clothes has multiple sizes. The target size of the target piece of clothes is determined according to the 3D data as follows. Multiple size data are obtained by acquiring size data for each of the multiple sizes. Multiple match values are obtained by acquiring, for each of the multiple size data, a match value with the 3D data. A size corresponding to a maximum match value of the multiple match values is determined as the target size.

The manner in which a match value between the size data and figure data is acquired is not limited herein. The size data can be matched with the figure data in terms of corresponding dimensions. For example, the size data is matched with the figure data in terms of waistlines, and a match value between the size data and the figure data can be obtained by weighting according to each dimension.

For instance, the target piece of clothes has four sizes, that is, size S, size M, size L, and size XL. In terms of size S, the waistline is 62, the hip circumference is 90, and the trousers length is 96. In terms of size M, the waistline is 66, the hip circumference is 94, and the trousers length is 97. In terms of size L, the waistline is 70, the hip circumference is 98, and the trousers length is 98. In terms of size XL, the waistline is 74, the hip circumference is 102, and the trousers length is 99. In terms of the figure data of a target user, the figure data include three dimensions, that is, the waistline, the hip circumference, and the trousers length, and each of the three dimensions has a weight of 1/3. For the user, the waistline is 68, the hip circumference is 96, and the trousers length is 97. If the size data of one dimension of the size is less than the figure data of a corresponding dimension, the match value of this dimension is 0. If the size data of one dimension of the size is greater than or equal to the figure data of the corresponding dimension, the match value of this dimension can be determined by a ratio of the figure data to the size data. As such, in terms of the size data of size S, all the three dimensions (that is, the waistline, the hip circumference, and the trousers length) are less than their respective figure data, and accordingly the match value between the size data of size S and the figure data is determined to be 0. In terms of the size data of size M, the trousers length is equal to a corresponding figure data, the other two dimensions (that is, the waistline and the hip circumference) are both less than their respective figure data, and accordingly the match value between the size data of size M and the figure data is determined to be 1/3. In terms of the size data of size L, all the three dimensions are greater than their respective figure data, and accordingly the match value between the size data of size L and the figure data is determined to be 1/3*(69/70+96/98+97/98), which is approximately equal to 0.985. In terms of the size data of size XL, all the three dimensions are greater than their respective figure data, and accordingly the match value between the size data of size XL and the figure data is 1/3*(69/74+96/102+97/99), which is approximately equal to 0.951. In other words, the maximum match value of the multiple match values is 0.985, that is, the target size is size L.

It can be understood that, the multiple size data are obtained by acquiring the size data for each of the multiple sizes. The multiple match values are acquired by acquiring, for each of the multiple size data, a match value with the figure data. The maximum match value in the multiple match values is determined. The size corresponding to the maximum match value is recommended as the target size. In this way, for each of the multiple sizes, the match value between the size data and the figure data is acquired, and then the size corresponding to the maximum match value is determined as the target size for recommendation, which is possible to further improve pushing accuracy of sizes.

In an implementation, the method further includes the following. An effect drawing is obtained by synthesizing, according to the target size, the target piece of clothes and a pre-stored human body model of the user, and then displayed.

In this implementation, the human body model is a 3D model generated according to the overall 3D data acquired in advance by the user with the 3D detecting module.

In implementations of the disclosure, there is no restriction on the manner in which the target piece of clothes and the human body model are synthesized. As an example, a virtual piece of clothes corresponding to the target piece of clothes can be applied to (such as stacked onto) a revised virtual human body model according to an association relationship between the target size of the target piece of clothes and the 3D data.

The scenario in which the effect drawing is displayed is not limited herein. The effect drawing may be added to a display page of the multiple clothes, or be added to a detailed display page corresponding to the target piece of clothing viewed by the user, or be displayed after the user adds the target piece of clothing to a shopping cart, for example, displayed in an image display area of the shopping cart.

In addition, the effect drawing can be generated by acquiring, with a camera, a current makeup style, outfit, hairstyle, etc. of the user, thereby making presentation more effective.

Furthermore, the effect drawing can also be rotated by 360 degrees, which makes presentation more effective.

In this implementation, the effect drawing is obtained by synthesizing, according to the target size, the target piece of clothes and the pre-stored human body model of the user, and then presented to the user. As such, whether to purchase the target piece of clothes can be determined by the user according to the effect drawing presented, which further makes pushing more flexible.

Similar to implementations illustrated in FIG. 2, FIG. 3 is a schematic structural diagram of an electronic device 300 according to another implementation of the present disclosure. The electronic device 300 includes a color sensor. As illustrated in FIG. 3, the electronic device 300 includes a processor 310, a memory 320, a communication interface 330, and one or more programs 340 stored in the memory and configured to be executed by the processor. The one or more programs 340 include instructions operable with the processor to: receive a search instruction for a specified clothes type; obtain a target color corresponding to a first area by scanning the first area with the color sensor; push clothes search information according to the target color and the specified clothes type.

As can be seen, the electronic device 300 receives the search instruction for a specified clothes type, obtains the target color corresponding to the first area by scanning the first area with the color sensor of the electronic device 300, and pushes the clothes search information according to the target color and the specified clothes type. As such, clothes search information corresponding to the specified clothes type and the target color can be pushed, which improves flexibility and accuracy of clothes information pushing.

In an implementation, the first area includes multiple separate sub-areas. In terms of obtaining the target color corresponding to the first area by scanning the first area with the color sensor, the one or more programs 340 include instructions operable with the processor to: obtain multiple colors by scanning the first area with the color sensor, where each of the multiple colors corresponds to one separate sub-area; display a selection page corresponding to the multiple colors; receive an instruction specifying a color sent by a user based on the selection page; determine the target color according to the instruction specifying a color.

In an implementation, in terms of pushing the clothes search information according to the target color and the specified clothes type, the one or more programs 340 include instructions operable with the processor to: search, from a predetermined database, for multiple clothes corresponding to the specified clothes type and the target color; acquire multiple clothes purchase records of a user on the specified clothes type; determine, according to the multiple clothes purchase records, an order of push of the multiple clothes; push, according to the order of push, the clothes search information of the multiple clothes.

In an implementation, the electronic device further includes a 3D detecting module. The one or more programs 340 further include instructions operable with the processor to: acquire, with the 3D detecting module, 3D data of a second area corresponding to the specified clothes type; determine, according to the 3D data, a target size of a target piece of clothes, where the target piece of clothes is any one of the multiple clothes; push the target size.

In an implementation, the target piece of clothes has multiple sizes. In terms of determining, according to the 3D data, the target size of the target piece of clothes, the one or more programs 340 include instructions operable with the processor to: obtain multiple size data by acquiring size data for each of the multiple sizes; obtain multiple match values by acquiring, for each of the multiple size data, a match value with the 3D data; determine a size corresponding to a maximum match value of the multiple match values as the target size.

In an implementation, the one or more programs 340 further include instructions operable with the processor to: obtain an effect drawing by synthesizing, according to the target size, the target piece of clothes and a pre-stored human body model of the user; display the effect drawing.

The foregoing technical solutions of implementations of the disclosure are mainly described from a perspective of execution of the method. It can be understood that, in order to implement the above functions, the electronic device includes hardware structures and/or software modules for performing respective functions. Those of ordinary skill in the art will appreciate that units and algorithmic operations of various examples described in connection with implementations herein can be implemented in hardware or a combination of computer software and hardware. Whether these functions are implemented by means of hardware or software depends on the particular application and the design constraints of the associated technical solution. For a specific application, those skilled in the art may use different methods to implement the described functionality, but such implementation should not be regarded as beyond the scope of the disclosure.

In implementations of the present disclosure, the electronic device can be divided into different functional units according to the above method implementations. For example, the electronic device can be divided into different functional units corresponding to each function, or two or more functions may be integrated into one processing unit. The integrated unit can take the form of hardware or a software functional unit. It is to be noted that, division of units provided herein is illustrative and is just a logical function division. In practice, there can be other manners of division.

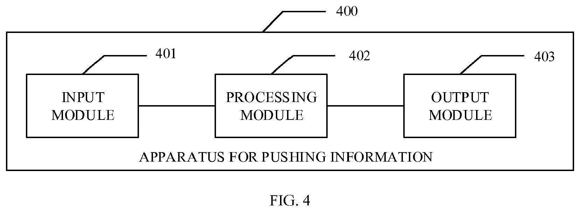

FIG. 4 is a block diagram of functional modules of an apparatus 400 for pushing information according to an implementation of the present disclosure. The apparatus 400 is applicable to an electronic device including a color sensor. The apparatus 400 includes an input module 401, a processing module 402, and an output module 403. The input module 401 is configured to receive a search instruction for a specified clothes type. The processing module 402 is configured to obtain a target color corresponding to a first area by scanning the first area with the color sensor. The output module 403 is configured to push clothes search information according to the target color and the specified clothes type.

As can be seen, the electronic device receives the search instruction for a specified clothes type, obtains the target color corresponding to the first area by scanning the first area with the color sensor of the electronic device, and pushes the clothes search information according to the target color and the specified clothes type. As such, clothes search information corresponding to the specified clothes type and the target color can be pushed, which makes clothes information pushing more flexible and accurate.

In an example, the first area includes multiple separate sub-areas. In terms of obtaining the target color corresponding to the first area by scanning the first area with the color sensor, the output module 403 is configured to display a selection page corresponding to the multiple colors. The input module 401 is configured to receive an instruction specifying a color sent by a user based on the selection page. The processing module 402 is configured to: obtain multiple colors by scanning the first area with the color sensor, where each of the multiple colors corresponds to one separate sub-area; determine the target color according to the instruction specifying a color.

In an example, in terms of pushing the clothes search information according to the target color and the specified clothes type, the processing module 402 is configured to: search, from a predetermined database, for multiple clothes corresponding to the specified clothes type and the target color; acquire multiple clothes purchase records of a user on the specified clothes type; determine, according to the multiple clothes purchase records, an order of push of the multiple clothes. The output module 403 is configured to push, according to the order of push, the clothes search information of the multiple clothes.

In an example, the electronic device further includes a 3D detecting module. The processing module 402 is further configured to: acquire, with the 3D detecting module, 3D data of a second area corresponding to the specified clothes type; determine, according to the 3D data, a target size of a target piece of clothes, where the target piece of clothes is any one of the multiple clothes. The output module 403 is further configured to push the target size.

In an example, the target piece of clothes has multiple sizes. In terms of determining, according to the 3D data, the target size of the target piece of clothes, the processing module 402 is configured to: obtain multiple size data by acquiring size data for each of the multiple sizes; obtain multiple match values by acquiring, for each of the multiple size data, a match value with the 3D data; determine a size corresponding to a maximum match value of the multiple match values as the target size.

In an example, the processing module 402 is further configured to obtain an effect drawing by synthesizing, according to the target size, the target piece of clothes and a pre-stored human body model of the user. The output module 403 is further configured to display the effect drawing.

According to implementations of the disclosure, a computer storage medium is further provided. The computer storage medium is configured to store computer programs. The computer programs are operable with a computer to perform all or part of the operations of any of the methods described in the foregoing method implementations. "Computer" referred to herein includes an electronic device.

According to implementations of the present disclosure, a computer program product is further provided. The computer program product includes a non-transitory computer readable storage medium configured to store computer programs. The computer programs are operable with a computer to perform all or part of the operations of any of the methods described in the foregoing method implementations. The computer program product may be a software installation package. The computer includes an electronic device.

When executed by a computer, the computer programs are operable with the computer to: receive a search instruction for a specified clothes type; obtain a target color corresponding to a first area by scanning the first area; push clothes search information according to the target color and the specified clothes type.

In one implementation, the computer programs are further operable with the computer to: search, from a predetermined database, for a plurality of clothes corresponding to the specified clothes type and the target color; acquire a plurality of clothes purchase records of a user on the specified clothes type; determine, according to the plurality of clothes purchase records, an order of push of the plurality of clothes.

In one implementation, the computer programs are further operable with the computer to: acquire 3D data of a second area corresponding to the specified clothes type; determine a target size according to the 3D data and push the target size determined.

In one implementation, the computer programs operable with the computer to determine the target size are further operable with the computer to: obtain a plurality of size data by acquiring size data for a plurality of sizes of any one of the plurality of clothes; obtain a plurality of match values by acquiring, for each of the plurality of size data, a match value with the 3D data; determine a size corresponding to a maximum match value of the plurality of match values as the target size.

The foregoing implementations can be combined or substituted with each other without conflicts.

It is to be noted that, for the sake of simplicity, the foregoing method implementations are described as a series of action combinations. However, it will be appreciated by those skilled in the art that the present disclosure is not limited by the sequence of actions described. The reason is that, according to the present disclosure, certain steps or operations may be executed in other orders or simultaneously. Besides, it will be appreciated by those skilled in the art that the implementations described in the specification are exemplary implementations and the actions and modules involved are not necessarily essential to the present disclosure.

In the foregoing implementations, the description of each implementation has its own emphasis. For the parts not described in detail in one implementation, reference may be made to related descriptions in other implementations.

In the implementations of the disclosure, the apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored or skipped. In addition, coupling or communication connection between each illustrated or discussed component may be direct coupling or communication connection, or may be indirect coupling or communication among devices or units via some interfaces, and may be electrical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the present disclosure may be integrated into one processing unit, or each unit may be physically present, or two or more units may be integrated into one unit. The above-mentioned integrated unit can be implemented in the form of hardware or a software program pattern.

The integrated unit may be stored in a computer-readable memory when it is implemented in the form of a software program pattern and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device, and so on) to perform all or part of the steps described in the various implementations of the present disclosure. The memory includes various medium capable of storing program codes, such as a universal serial bus (USB) flash disk, a read-only memory (ROM), a random-access memory (RAM), a removable hard disk, a magnetic disk, a compact disc (CD), or the like.

It will be understood by those of ordinary skill in the art that all or part of the steps of the various methods of the implementations described above may be accomplished by means of a program to instruct associated hardware, and the program may be stored in a computer-readable memory, which may include a flash memory, a ROM, a RAM, a magnetic disk, or a CD, and so on.

## Claims

1. A method for pushing information, being applicable to an electronic device comprising a color sensor, and the method comprising:
receiving (201) a search instruction for a specified clothes type;
obtaining (202) a target color corresponding to a first area by scanning the first area with the color sensor; and
pushing (203) clothes search information according to the target color and the specified clothes type.

2. The method of claim 1, wherein the first area comprises a plurality of separate sub-areas, and obtaining (202) the target color corresponding to the first area by scanning the first area with the color sensor comprises:
obtaining a plurality of colors by scanning the first area with the color sensor, wherein each of the plurality of colors corresponds to one separate sub-area;
displaying a selection page corresponding to the plurality of colors;
receiving an instruction specifying a color sent by a user based on the selection page; and
determining the target color according to the instruction specifying a color.

3. The method of claim 1 or 2, wherein pushing (203) the clothes search information according to the target color and the specified clothes type comprises:
searching, from a predetermined database, for a plurality of clothes corresponding to the specified clothes type and the target color;
acquiring a plurality of clothes purchase records of a user on the specified clothes type;
determining, according to the plurality of clothes purchase records, an order of push of the plurality of clothes; and
pushing, according to the order of push, the clothes search information of the plurality of clothes.

4. The method of claim 3, wherein the electronic device further comprises a 3-dimension (3D) detecting module, and the method further comprises:
acquiring, with the 3D detecting module, 3D data of a second area corresponding to the specified clothes type;
determining, according to the 3D data, a target size of a target piece of clothes, wherein the target piece of clothes is any one of the plurality of clothes; and
pushing the target size.

5. The method of claim 4, wherein the target piece of clothes has a plurality of sizes, and determining, according to the 3D data, the target size of the target piece of clothes comprises:
obtaining a plurality of size data by acquiring size data for each of the plurality of sizes;
obtaining a plurality of match values by acquiring, for each of the plurality of size data, a match value with the 3D data; and
determining a size corresponding to a maximum match value of the plurality of match values as the target size.

6. The method of claim 5, wherein the size data and the 3D data each comprises a plurality of dimensions, and obtaining the plurality of match values by acquiring, for each of the plurality of size data, the match value with the 3D data comprises:
comparing the size data and the 3D data in terms of each dimension;
obtaining a plurality of sub-match values with the 3D data by determining a sub-match value with the 3D data for each dimension according to a result of the comparing; and
obtaining the match value by weighting of the plurality of sub-match values.

7. The method of claim 3, wherein searching, from the predetermined database, for the plurality of clothes corresponding to the specified clothes type and the target color comprises:
acquiring from the predetermined database information on a plurality first clothes corresponding to the specified clothes type;
for each of the plurality first clothes, determining a match value with the target color; and
determining the first clothes with a match value greater than a preset threshold as the clothes.

8. An electronic device (100), comprising;
a communication circuit (124), configured to receive a search instruction for a specified clothes type;
a color sensor (1211), configured to obtain a target color corresponding to a first area by scanning the first area; and
a control circuit (110), coupled with the communication circuit and the color sensor, and configured to push clothes search information according to the target color and the specified clothes type.

9. The electronic device (100) of claim 8, further comprising a display screen (123), wherein the first area is of a plurality of colors and the communication circuit (124) is further configured to:
display, via the display screen (123), a selection page corresponding to the plurality of colors; and
control the communication circuit (124) to receive an instruction specifying one color sent by a user based on the selection page; and
control the color sensor (1211) to determine the target color according to the instruction specifying a color.

10. The electronic device (100) of claim 8, wherein the control circuit (110) configured to push the clothes search information according to the target color and the specified clothes type is configured to:
search, from a predetermined database, for a plurality of clothes corresponding to the specified clothes type and the target color;
acquire a plurality of clothes purchase records of a user on the specified clothes type;
determine, according to the plurality of clothes purchase records, an order of push of the plurality of clothes; and
push, according to the order of push, the clothes search information of the plurality of clothes.

11. The electronic device (100) of claim 10, wherein the electronic device (100) further comprises a 3-dimension (3D) detecting module (1252), the 3D detecting module (1252)is configured to acquire 3D data of a second area corresponding to the specified clothes type, and wherein
the control circuit (110) is configured to:
determine a target size according to the 3D data; and
push the target size.

12. The electronic device (100) of claim 11, wherein at least one piece of the plurality of clothes has a plurality of sizes, and the control circuit (110) configured to determine the target size is configured to:
obtain a plurality of size data by acquiring size data for each of the plurality of sizes;
obtain a plurality of match values by acquiring, for each of the plurality of size data, a match value with the 3D data; and
determine a size corresponding to a maximum match value of the plurality of match values as the target size.

13. The electronic device (100) of claim 12, wherein the size data and the 3D data each comprises a plurality of dimensions, and the control circuit (110) configured to obtain the plurality of match values is configured to:
compare the size data and the 3D data in terms of each dimension;
obtain a plurality of sub-match values with the 3D data by determining a sub-match value with the 3D data for each dimension according to a result of comparison; and
obtain the match value by weighting of the plurality of sub-match values.

14. The electronic device (100) of any of claims 10 to 13, wherein the control circuit (110) is further configured to:
search, from a predetermined database, for a plurality of clothes corresponding to the specified clothes type and the target color;
acquire a plurality of clothes purchase records of a user on the specified clothes type; and
determine, according to the plurality of clothes purchase records, an order of push of the plurality of clothes, wherein the clothes search information of the plurality of clothes is pushed according to the order of push determined.

15. A computer readable storage medium, configured to store computer programs which, when executed by a computer, are operable with the computer to perform the method of any of claims 1 to 7.
